# EUROPEAN PATENT APPLICATION

(11) **EP 4 091 689 A1**
(43) Date of publication of application: **23.11.2022**
(21) Application number: 21174408.1
(22) Date of filing: 18.05.2021
(51) Int. Cl.: B01D 17/02, B01D 17/12, E02B 15/04

(54) **METHOD FOR SEPARATING A FLUID MIXTURE AND DEVICE FOR SEPARATION OF A FLUID MIXTURE**

(71) Applicant: Otto-von-Guericke-Universität Magdeburg, 39106 Magdeburg (DE)
(72) Inventor: LONE, Haseeb Zaffar, 39104 Magdeburg (DE)

(57) **Abstract**

The invention relates to a method for separating a fluid mixture, especially oil and water, wherein the fluid mixture is introduced in compartments and separated by gravity. The invention relates further to a device for performing such a method.

## Description

The invention relates to a method for separating a fluid mixture and to a corresponding device for separation of a fluid mixture.

Oil spills are a quite dangerous occurrence because the marine ecosystem is affected, and sea life gets threatened. Since exploration of oil from oceanic resources is necessary to provide enough oil, it is important to be prepared for an efficient cleanup of oil spills which may happen accidentally.

Oil is one of the most common pollutants in the oceans. About three million metric tons of oil contaminates the oceans annually. Oil spills vary in their severity and the extent of damage they cause. This can be attributed to variations in the oil type, the location of the spill, and the weather conditions present. The spread and behavior of spilt oil in the seas is governed by a variety of chemical, physical and biological processes. Oil spills are a serious concern, as they can inflict a lot of damage to the ecosystem. The effects are experienced not only in the area of the spill but can also expand over vast regions to negatively impact shorelines and terrestrial wildlife thousands of meters away from the site of the spill. The global oil spill management market size was worth about 130 billion Euros in 2015.

When oil is accidentally mixed with water, a fluid mixture results. Cleanup of an oil spill thus typically provides for separating the fluid mixture into its components, especially to extract oil from seawater so that it can be disposed.

It is thus an object of the invention to provide for a method for separating a fluid mixture and to provide for a corresponding device which are embodied alternatively or better compared with known solutions. According to the invention, this is achieved with a method and a device according to the respective main claims. Preferred embodiments can, for example, be derived from the respective dependent claims. The content of the claims is made a content of the description by explicit reference.

The invention relates to a method for separating a fluid mixture. The method comprises the following steps:
- providing a container having a division element, the division element dividing the container into a first compartment and a second compartment, the first compartment and the second compartment being sealed against each other, the division element being movable along a path; and
- periodically repeating the following steps:
- moving the division element in a first direction, thus increasing a volume of the first compartment and decreasing a volume of the second compartment, thereby introducing fluid mixture into the first compartment, then
- waiting for a predefined first waiting time, then
- moving the division element in a second direction, thus increasing the volume of the second compartment and decreasing the volume of the first compartment, thereby introducing fluid mixture into the second compartment, then
- waiting for a predefined second waiting time;
   wherein, while a volume of a compartment is decreased, a type of fluid flowing out of the compartment is detected,
- wherein fluid of a first type is directed to a first destination, and
- wherein fluid of a second type is directed to a second destination.

Such a method provides for an efficient separation of a fluid mixture, for example a fluid mixture comprising oil and water. The direction of the fluids of two different types to different destinations can be used in order to release water to the sea and in order to store oil in a tank for disposal. The oil thus no longer contaminates the water, and the method can thus be used preferably to help with the cleanup of an oil spill. However, also other fluid mixtures can be treated by the disclosed method.

The container may especially be an element being sealed against the outside despite openings for the mentioned functionality of letting in a fluid mixture and/or letting out fluids. Especially, the division element may be sealed against an inside surface of the container so that the first compartment and the second compartment are sealed against each other. Typically, there is also no other fluid connection between these two compartments so that they are sealed.

Especially, the first type may be different from the second type. Furthermore, the first destination may especially be different from the second destination.

Increasing a volume of the first compartment and decreasing a volume of the second compartment is typically achieved simultaneously by moving the division element. When the division element moves, a part of one compartment will become part of the other compartment. This is true in both directions.

The waiting time is especially a time in which a separation by gravity is performed on the fluid mixture. Typically, the fluid with the lower mass density will be positioned at the top and the fluid with higher mass density will be positioned at the bottom of a compartment after the respective waiting time. This allows for separation of the fluid mixture according to mass densities of the fluids.

The fluid mixture is typically comprised of the fluid of a first type and the fluid of a second type. However, in principle there can also be other types of fluids, for example a fluid of a third type. For such a fluid, a third destination can be used. Typically, when the method is used for cleanup of an oil spill, water and oil are the main types of fluid that are relevant when performing the method.

The fluid mixture may be introduced into a compartment by underpressure generated by moving the division element. For example, the underpressure is generated in a compartment and thus fluid mixture is sucked into the compartment in order to compensate for the underpressure. This allows for an active introduction of the fluid mixture into the respective compartment.

The fluid mixture may be introduced into at least one of the compartments by static pressure. This may especially be used for a compartment being located below another compartment. For example, the fluid mixture can be introduced at the bottom side of such a compartment by generating static pressure in a surrounding cavity, in which the fluid mixture is introduced from an opening and may wait until it is released into the compartment by its own static pressure.

Each compartment may be selectively closable by a respective inlet valve towards a reservoir of the fluid mixture. Each inlet valve may be opened while increasing the volume of the compartment. Each inlet valve may be closed while decreasing the volume of the compartment. This allows for a control of inflowing fluid mixture so that the compartments are filled with fluid mixture when its volume is increased, and wherein an opening used for letting in the fluid mixture does not disturb the operation after the fluid mixture has been introduced into the respective compartment.

According to an embodiment, the fluid reservoir is formed by a fluid volume surrounding the container. For example, the container may be partially or completely submerged in the fluid volume. For example, the fluid volume may be an ocean or a sea. The fluid volume may especially comprise the fluid mixture, for example a mixture of water and oil. While water is a typical substance found in an ocean or sea, oil is typically only present after an oil spill or another event that leads to the presence of oil and can be removed by using the method.

Especially, the fluid of a first type may be oil. Especially, the fluid of a second type may be water. Thus, the method may especially be used in order to separate oil from water, for example after an oil spill. However, also other types of fluids can be used.

According to an embodiment, the first waiting time and/or the second waiting time is at least 8 seconds. According to an embodiment, the first waiting time and/or the second waiting time is at most 20 seconds. Such values have been proven suitable for separation of oil and water by gravity. The first waiting time may especially be identical to the second waiting time. However, also other values for the waiting times can be used. The fluid mixture may especially be purely gravitationally separated during the first waiting time and/or during the second waiting time. Such a separation may especially be defined as being complete after a separation process has stopped, or after at least the two types of fluids are separated to a certain extent that is suitable for operation.

More generally, the first waiting time may be at least 5 seconds, at least 8 seconds, at least 10 seconds, at least 15 seconds or at least 20 seconds, and/or may be at most 8 seconds, at most 10 seconds, at most 15 seconds, at most 20 seconds or at most 30 seconds. The same may be true for the second waiting time. Each lower value can be combined with each higher value to form a suitable interval. However, also other values can be used.

The type of fluid may especially be detected using at least one fluid type detection sensor. Such a fluid type detection sensor may especially be a capacitive sensor or an ultrasonic sensor. It may also be a piezoelectric sensor or an ultraviolet sensor. Such types of sensors have been proven suitable for differentiating oil from water, so that these types of fluids can be reliably detected and can be directed to their respective destination. Especially, two such fluid type detection sensors can be used, preferably one for each compartment. However, also other sensor types can be used.

Each compartment may have a respective first outlet valve and a respective second outlet valve. While fluid is to be directed to the first destination, the first outlet valve may be opened, and the second outlet valve may be closed. While fluid is to be directed to the second destination, the second outlet valve may be opened, and the first outlet valve may be closed. These outlet valves provide for a specific control of the fluid outlet from each of the compartments, so that the different types of fluids may be directed to their respective destinations. A mixture of the types of fluids after they have been separated in one of the compartments can be omitted.

During each step with decreasing volume of the first compartment, the fluid of the first type may be moved out of the first compartment before the fluid of the second type is moved out of the first compartment. Correspondingly, during each step with decreasing volume of the second compartment, the fluid of the second type may be moved out of the second compartment before the fluid of the first type is moved out of the second compartment. Especially, the destinations can be switched when it is detected that fluid of another type leaves the respective compartment. With the described implementation, the two compartments can, for example, be positioned on top of each other, so that the fluid of the first type is moved out of the first compartment before the fluid of the second type is moved out of the first compartment with the division element ascending, and vice versa for the second compartment.

The first destination may be an oil tank or a storage tank. Such an oil tank may, for example, be positioned besides the container and may, for example, swim on a surface of the reservoir of the fluid mixture, for example on the surface of an ocean or a sea. From such an oil tank or storage tank, the fluid of the first type may be disposed correctly so that no environmental damage can occur anymore.

The second destination may be a surrounding of the container. This may especially be relevant when the fluid of the second type is not harmful and is the natural medium of the surrounding of the container, for example an ocean or a sea. The second destination may especially be identical to the reservoir.

The path may especially have a vertical orientation or at least a substantially vertical orientation. This may especially lead to a vertical movement of the sliding element. This simplifies operation, as a gravitational separation of two fluids typically also leads to a separation of the fluids in an upper part and a lower part. For example, the container can be adapted to swim in a surrounding fluid mixture or fluid, for example water, and may at least partially submerge. The container may especially be adapted in order to have a vertical orientation if the surface of the surrounding water is flat. Especially, a lifting body may be designed accordingly. In the case of waves or other disturbances of a flat surface, some deviations to the vertical orientation may occur. This may be regarded as a substantial vertical orientation.

The invention relates further to a device for separation of a fluid mixture. The device comprises a container having a division element, the division element dividing the container into a first compartment and a second compartment, the first compartment and the second compartment being sealed against each other, the division element being movable along a path. The device may comprise a first inlet valve and a second inlet valve, wherein the first compartment is selectively closable by the first inlet valve towards a reservoir of the fluid mixture and wherein the second compartment is selectively closable by the second inlet valve towards the reservoir of the fluid mixture. The device may comprise a first outlet valve of the first compartment and a second outlet valve of the first compartment, this first outlet valve controlling fluid flow from the first compartment to a first destination and this second outlet valve controlling fluid flow from the first compartment to a second destination. The device may comprise a first outlet valve of the second compartment and a second outlet valve of the second compartment, this first outlet valve controlling fluid flow from the second compartment to the first destination and this second outlet valve controlling fluid flow from the second compartment to the second destination. The device may comprise at least one fluid type detection sensor being configured to detect a type of fluid flowing out of the compartments to the destinations. The device may further comprise a controller being configured to perform a method as disclosed herein. With regard to the method, all embodiments and variations can be applied.

With such a device, the method as disclosed herein can be performed in a preferable manner. Especially, the container and its two compartments can be used in order to separate two types of fluid, for example oil and water, by gravity, and these different fluids may be disposed to different destinations.

All statements given with regard to the method are also applicable for the device. The same is true in the opposite direction.

Especially, the division element may move up and down when the method as disclosed herein is performed.

The fluid mixture may especially be introduced into a compartment by underpressure generated by moving the division element. The fluid mixture may also be introduced into at least one compartment by static pressure. The fluid type detection sensor may especially be an ultrasonic sensor or a capacitive sensor or a piezoelectric sensor or an ultrasonic sensor. Possibly there can be two such sensors, one for each compartment. The fluid type detection sensor may especially be positioned in an outgoing fluid flow before any valve that controls where outgoing fluid is to be directed to. The path may especially have a vertical orientation or at least a substantially vertical orientation.

The device may further comprise a lifting body being embodied for holding the device partially submerged at a water surface and/or for aligning the path at least essentially perpendicular to a water surface. Such a lifting body may allow the device to swim independently on a water surface and to be used to clean the surrounding water, which may be contaminated with oil. For example, the lifting body may be a floating tube. The lifting body may be oleophilic at the outside, or it may be oleophobic at the outside. This may lead to specific properties towards the surrounding.

The device may comprise an outer casing surrounding the container and defining a cavity between the container and the outer casing. The cavity may have an upper opening towards the reservoir. An inlet opening of the second compartment, especially being closable by the second inlet valve, may open towards the cavity, especially opposite to the upper opening. Such a configuration may define the cavity between the outer casing and the container, which may be used in order to build up static pressure which may in turn be used to fill the second compartment. Thus, the cavity may be filled automatically just by fluid mixture entering at the upper opening and the static pressure is built up because the fluid mixture can only leave the cavity by entering the second compartment.

Especially, the first inlet valve and the first compartment may be positioned on top, and the second inlet valve and the second compartment may be positioned at the bottom of the device or the container. Especially, the first compartment may be positioned above the second compartment. This may be true for all possible positions of the division element, especially in normal operation conditions.

The device may further comprise an oil tank or a storage tank being the first destination. The second destination may be a surrounding of the device. The reservoir may be formed by fluid surrounding the container. With respect to details, reference is made to the statements given with respect to the method.

With respect to the waiting times, reference is also made to the statements given above with respect to the method.

The container may have a cylindrical form. Especially, it may have a circular cross-section. However, also other forms can be used.

The division element may extend perpendicular to the path. This has proven to be a simple implementation. However, also other orientations can be used.

The division element may especially be movable by an electric motor. Such a motor may, for example, drive a rotating element like a threaded rod, which may in turn move the division element, for example up and down.

The device may further comprise a battery or another electric power source for autonomous power supply of the device. It has been found out that the working principle of the device is suitable for autonomous operation, because power consumption is low. For example, a fuel cell or solar cells may also be used as a power supply.

It shall be noted that the method and the device can also be used in order to separate chemicals, for example in industrial appliances.

For example, the container may have a length of at least 400 mm and/or at most 2 m. It may have a diameter of at least 150 mm and/or at most 250 mm, or 200 mm. However, also other values can be used, especially according to specific use requirements. The container may have respective inlet openings at the top and the bottom. The outer casing may be made of the same material as the container but may also be made of another material. The container may, for example, have a wall thickness of at least 0.5 mm and/or at most 1.5 mm, or 1 mm. The outer casing may have a higher wall thickness, for example at least 1.5 mm and/or at most 2.5 mm, or 2 mm. The container may have, for example, a capacity of at least 10 I, at least 20 I, at least 30 I, or at least 40 I. It may have a capacity of at most 20 I, at most 30 I, at most 40 I, or at most 50 I. For example, it may have a capacity of 35 I. However, also other values can be used. For example, polycarbonate can be used as a material for the container and/or the outer casing. However, also other materials like steel can be used.

To keep the device afloat precisely at the water and oil level, a floating tube can surround the setup to keep it in a vertical position. The top layer of the floating tube can be oleophilic in order to attract more oil so that the oil-to-water-ratio collected by the device will be higher. However, it may also be non-oleophilic.

Due to the design and low power consumption, typically no external energy source will be required to separate oil from water. This allows independent and reliable operation. For example, a battery can be used for power supply.

For example, the fluid type detection sensor can be used either to differentiate the oil and water level in the cylinder or in the container, or directly differentiate the change in density of fluid in an output tubing. Microvalves can help to separate the oil and water by getting the input information from the sensor and opening and closing the outlet accordingly. The microvalves control the output tubing and depending on their orientation they will direct the oil and water through different output tubes.

For a closing mechanism, for example a solid structure can act as a valve for inlet flow into the container. As a reservoir for oil, for example a large inflatable container can be used, especially for collecting oil.

Further details and advantages will be apparent from the following description of the drawing, wherein:
fig. 1: shows a device for separation of a fluid mixture, and
fig. 2: shows the device in a state during a waiting time.

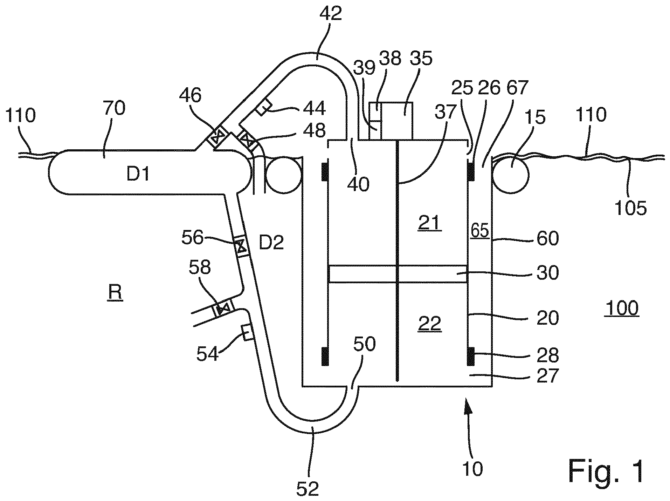

Fig. 1 shows purely schematically a device 10 for separation of a fluid mixture. The device 10 is predominantly submerged in water 100, being a fluid of a second type. On a surface 105 of the water 100, there is partially oil 110, being a fluid of a first type. Thus, oil and water together form a fluid mixture 100, 110. This is even true if oil typically swims as a film on the water surface 105. The purpose of the device 10 is to remove the oil 110. The surrounding of the device 10 in which the water 100 and the oil 110 are present forms a reservoir R.

The device 10 comprises a lifting body 15 being embodied as torus having a hollow interior in order to make the device 10 swim partially submerged in the water 100. The lifting body 15 may also be regarded as a floating body.

The device 10 comprises a cylindrical container 20. The container 20 is divided into a first compartment 21 and a second compartment 22 by a division element 30. The division element 30 is embodied as a flat sheet and is sealed against the container 20. Thus, the two compartments 21, 22 are separated and sealed against each other by the division element 30.

The first compartment 21 comprises a first inlet opening 25, being closable by a first inlet valve 26. The second compartment 22 comprises a second inlet opening 27, being closable by a second inlet valve 28. The inlet valves 26, 28 are embodied as rings surrounding the container 20 and being movable in a vertical direction in order to close or open the inlet openings 25, 27. In the state shown in fig. 1, both inlet openings 25, 27 are open.

For moving the division element 30, an electric motor 35 is placed on the top of the container 20. It drives a threaded rod 37, which is connected with the division element 30 and is thus able to move the division element 30 up and down. Besides the electric motor 35, there is a controller 38 being configured to control operation of the electric motor 35 and of all valves being part of the device 10. Furthermore, there is a power source 39 in form of a battery in order to autonomously provide electric power.

The container 20 is surrounded by an outer casing 60, forming a cavity 65 between the container 20 and the outer casing 60. The cavity 65 has an upper opening 67, through which water 100 and oil 110 can enter the cavity 65. Thus, static pressure is generated simply by having water 100 and oil 110 in the cavity 65, wherein these fluids may enter the upper opening 67 simply by swell.

The second inlet opening 27 is positioned at the bottom of the outer casing 60. Thus, the static pressure generated in the cavity 65 presses water 100 and oil 110 present in the cavity 65 into the second chamber 22 when the second inlet valve 28 opens the second inlet opening 27.

The first compartment 21 comprises a first outlet opening 40, to which a first outlet tube 42 is attached. At the first outlet tube 42, there is arranged a first fluid type detection sensor 44. After the first fluid type detection sensor 44, the first outlet tube 42 divides into two lines each having a valve, namely a first outlet valve 46 of the first compartment 21 and a second outlet valve 48 of the first compartment 21. The first outlet valve 46 of the first compartment 21 opens or closes a line towards a storage tank 70, being a first destination D1. The second outlet valve 48 of the first compartment 21 opens or closes towards the surrounding water 100, being the second destination D2 and being identical to the reservoir R.

The second compartment 22 also has a second outlet opening 50 with a second outlet tube 52 attached to it. There is also a second fluid type detection sensor 54. Also, the second outlet tube 52 divides into two lines, one with a first outlet valve 56 of the second compartment 22 controlling fluid flow towards the storage tank 70 and a second outlet valve 58 of the second compartment 22 controlling fluid flow to the surrounding water 100.

In the following, operation of the device 10 is described. When the division element 30 is at the top of the container 20, the first inlet valve 26 may be opened. The division element 30 may be moved down by the electric motor 35, so that the volume of the first compartment 21 is increased. Thereby, a mixture of water 100 and oil 110 is introduced into the first compartment 21, especially by swell. When the division element 30 has reached its lowermost position, the system waits for a waiting time, for example 15 seconds. During this waiting time, water 100 and oil 110 separate by the influence of gravity. Oil 110 is then positioned above water 100 in the first compartment 21.

Then, the first inlet valve 26 is closed, and the division element 30 is moved up. At first, the first outlet valve 46 of the first compartment 21 is opened, so that the oil 110 being inside the first compartment 21 is disposed to the storage tank 70. After the first fluid type detection sensor 44 detects that water flows through the first outlet tube 42, the first outlet valve 46 of the first compartment 21 is closed and the second outlet valve 48 of the first compartment 21 is opened. Thus, the water 100 will then be pushed out of the first compartment 21 and will immediately be disposed to the surrounding. The oil 110 can be stored in the storage tank 70 until it is disposed in order to no longer be harmful to the environment.

While the division element 30 is moved up for performing the task described in the previous paragraph, the second inlet valve 28 is open and fluid enters the second compartment 22 through the second inlet opening 27. This is performed simply due to the static pressure that built up in the cavity 65 and, in addition, by a suction effect created by moving the division element 30, so that no active pumping is needed in order to fill the second compartment 22. After waiting for a second waiting time in which water 100 and oil 110 separate in the second compartment 22, the division element 30 is moved down and the process described in the previous paragraph is performed with the outlet valves 56, 58 of the second compartment 22 and the second fluid type detection sensor 54, thus separating oil 110 from water 100. Meanwhile, the first compartment 21 is filled with water 100 and oil 110, as described above, and the cycle restarts.

The device 10 thus allows for an easy and reliable separation of water 100 and oil 110, so that the oil 110 can be disposed, which is especially very useful for oil spill management. As power consumption of the device 10 is low, autonomous operation is possible at least for several hours or days. For example, the device 10 may be fastened to an anchor or being held in position by other means like a line securing the device 10 to a platform or a ship.

It should be noted that fig. 1 shows no fluids inside the compartments 21, 22 for illustrative purposes.

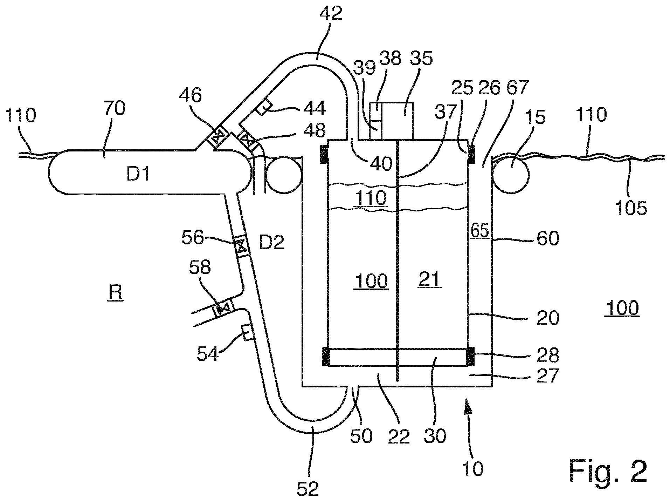

Fig. 2 shows the same device 10 as fig. 1 specifically during a waiting time. The division element 30 is in its lowermost position. The first compartment 21 is filled with water 100 and oil 110 that have been separated from each other by gravity. The oil 110 is above the water 100. The first inlet valve 26 is closed. Thus, the two fluids may be separated as described above, wherein the oil 110 is directed to the first destination D1 and the water is directed to the second destination D2.

Mentioned steps of the inventive method can be performed in the given order. However, they can also be performed in another order, as long as this is technically reasonable and not excluded by the wording of the claims. The inventive method can, in an embodiment, for example with a certain combination of steps, be performed in such a way that no further steps are performed. However, also other steps may be performed, including steps that are not mentioned.

It is to be noted that features may be described in combination in the claims and in the description, for example in order to provide for better understandability, despite the fact that these features may be used or implemented independent from each other. The person skilled in the art will note that such features can be combined with other features or feature combinations independent from each other.

References in dependent claims may indicate preferred combinations of the respective features, but do not exclude other feature combinations.

### List of reference signs

- 10: Device
- 15: Lifting body
- 20: Container
- 21: First compartment
- 22: Second compartment
- 25: First inlet opening
- 26: First inlet valve
- 27: Second inlet opening
- 28: Second inlet valve
- 30: Division element
- 35: Electric motor
- 37: Threaded rod
- 38: Controller
- 39: Power source
- 40: First outlet opening
- 42: First outlet tube
- 44: First fluid type detection sensor
- 46: First outlet valve of the first compartment
- 48: Second outlet valve of the first compartment
- 50: Second outlet opening
- 52: Second outlet tube
- 54: Second fluid type detection sensor
- 56: First outlet valve of the second compartment
- 58: Second outlet valve of the second compartment
- 60: Outer casing
- 65: Cavity
- 67: Upper opening
- 70: Storage tank
- 100: Water
- 105: Surface
- 110: Oil
- R: Reservoir
- D1: first destination
- D2: second destination

## Claims

1. Method for separating a fluid mixture (100, 110),
the method comprising the following steps:
- providing a container (20) having a division element (30), the division element (30) dividing the container (20) into a first compartment (21) and a second compartment (22), the first compartment (21) and the second compartment (22) being sealed against each other, the division element (30) being movable along a path; and
periodically repeating the following steps:
- moving the division element (30) in a first direction, thus increasing a volume of the first compartment (21) and decreasing a volume of the second compartment (22), thereby introducing fluid mixture (100, 110) into the first compartment (21), then
- waiting for a predefined first waiting time, then
- moving the division element (30) in a second direction, thus increasing the volume of the second compartment (22) and decreasing the volume of the first compartment (21), thereby introducing fluid mixture (100, 110) into the second compartment (22), then
- waiting for a predefined second waiting time;
wherein, while a volume of a compartment (21, 22) is decreased, a type of fluid flowing out of the compartment (21, 22) is detected,
- wherein fluid of a fist type is directed to a first destination (D1), and
- wherein fluid of a second type is directed to a second destination (D2).

2. Method according to claim 1,
- wherein the fluid mixture (100, 110) is introduced into a compartment by underpressure generated by moving the division element (30);
and/or
- wherein the fluid mixture (100, 110) is introduced into at least one of the compartments (21, 22) by static pressure.

3. Method according to one of the preceding claims,
- wherein each compartment (21, 22) is selectively closable by a respective inlet valve (26, 28) towards a reservoir (R) of the fluid mixture (100, 110),
- wherein each inlet valve (26, 28) is opened while increasing the volume of the compartment (21, 22), and
- wherein each inlet valve (26, 28) is closed while decreasing the volume of the compartment (21, 22).

4. Method according to claim 3,
- wherein the reservoir (R) is formed by fluid volume surrounding the container (20).

5. Method according to one of the preceding claims,
- wherein the fluid of a first type is oil (110);
and/or
- wherein the fluid of a second type is water (100).

6. Method according to one of the preceding claims,
- wherein the first waiting time and/or the second waiting time is at least 8 seconds;
and/or
- wherein the first waiting time and/or the second waiting time is at most 20 seconds;
and/or
- wherein the first waiting time is identical to the second waiting time;
and/or
- wherein the fluid mixture (100, 110) is purely gravitational separated during the first waiting time and/or during the second waiting time.

7. Method according to one of the preceding claims,
- wherein the type of fluid is detected using at least one fluid type detection sensor (44, 54);
and/or
- wherein the type of fluid is detected using at least one fluid type detection sensor (44, 54) being a capacitive sensor or an ultrasonic sensor.

8. Method according to one of the preceding claims,
- wherein each compartment (21, 22) has a respective first outlet valve (46, 56) and a respective second outlet valve (48, 58), and
- wherein, while fluid is to be directed to the first destination (D1), the first outlet valve (46, 56) is opened and the second outlet valve (48, 58) is closed, and
- wherein, while fluid is to be directed to the second destination (D2), the second outlet valve (48, 58) is opened and the first outlet valve (46, 56) is closed.

9. Method according to one of the preceding claims,
- wherein, during each step with decreasing volume of the first compartment (21), the fluid of the first type is moved out of the first compartment (21) before the fluid of the second type is moved out of the first compartment (21);
and/or
- wherein, during each step with decreasing volume of the second compartment (22), the fluid of the second type is moved out of the second compartment (22) before the fluid of the first type is moved out of the second compartment (22).

10. Method according to one of the preceding claims,
- wherein the first destination (D1) is an oil tank or a storage tank (70);
and/or
- wherein the second destination (D2) is a surrounding of the container (20).

11. Method according to one of the preceding claims,
- wherein the path has a vertical orientation or at least a substantial vertical orientation.

12. Device (10) for separation of a fluid mixture (100, 110), the device (10) comprising
- a container (20) having a division element (30), the division element (30) dividing the container (20) into a first compartment (21) and a second compartment (22), the first compartment (21) and the second compartment (22) being sealed against each other, the division element (30) being movable along a path,
- a first inlet valve (26) and a second inlet valve (28), wherein the first compartment (21) is selectively closable by the first inlet valve (26) towards a reservoir (R) of the fluid mixture (100, 110), and wherein the second compartment (22) is selectively closable by the second inlet valve (28) towards the reservoir (R) of the fluid mixture (100, 110),
- a first outlet valve (46) of the first compartment (21) and a second outlet valve (48) of the first compartment (21), this first outlet valve (46) controlling fluid flow from the first compartment (21) to a first destination (D1), and this second outlet valve (48) controlling fluid flow from the first compartment (21) to a second destination (D2),
- a first outlet valve (56) of the second compartment (22) and a second outlet valve (58) of the second compartment (22), this first outlet valve (56) controlling fluid flow from the second compartment (22) to the first destination (D1), and this second outlet valve (58) controlling fluid flow from the second compartment (22) to the second destination (D2),
- at least one fluid type detection sensor (44, 54) being configured to detect a type of fluid flowing out of the compartments (21, 22) to the destinations (D1, D2), and
- a controller being configured to perform a method according to one of the preceding claims.

13. Device (10) according to claim 12,
- further comprising a lifting body (15) being embodied for holding the device (10) partially submerged at a water surface (105) and/or for aligning the path at least substantially perpendicular to a water surface (105).

14. Device (10) according to one of claims 12 or 13,
- wherein the device (10) comprises an outer casing (60) surrounding the container (20) and defining a cavity (65) between the container (20) and the outer casing (60),
- wherein the cavity (65) has an upper opening (67) towards the reservoir (R), and
- wherein an inlet opening (27) of the second compartment (22), being closable by the second inlet valve (28), opens towards the cavity (65) opposite to the upper opening (67).

15. Device (10) according to one of claims 12 to 14,
- further comprising an oil tank or a storage tank (70) being the first destination (D1);
and/or
- wherein the second destination (D2) is a surrounding of the device (10);
and/or
- wherein the reservoir (R) is formed by fluid surrounding the container (20).
